# EUROPÄISCHE PATENTSCHRIFT

(11) **EP 1 837 986 B1**
(45) Veröffentlichungstag und Bekanntmachung des Hinweises auf die Patenterteilung: **19.12.2018**
(21) Anmeldenummer: 07004621.4
(22) Anmeldetag: 07.03.2007
(51) Int. Cl.: H02P 6/18, H02P 6/26

(54) **Verfahren und Anordnung zum Betrieb eines elektronisch kommutierten Motors**
Method and assembly for operating an electronically commuted motor
Procédé et agencement destinés au fonctionnement d'un moteur commuté électroniquement

(30) Priorität: 24.03.2006 DE 102006014520
(43) Veröffentlichungstag der Anmeldung: 26.09.2007
(73) Patentinhaber: ebm-papst St. Georgen GmbH & Co. KG, 78112 St. Georgen (DE)
(72) Erfinder: Karwath, Arno, 78652 Deißlingen (DE)
(74) Vertreter: Staeger & Sperling Partnerschaftsgesellschaft mbB

(56) Entgegenhaltungen:
- US-A1- 2004 051 489
- US-B1- 6 452 349

## Beschreibung

Die Erfindung betrifft ein Verfahren und eine Anordnung zum Betrieb eines elektronisch kommutierten Motors (ECM).

Die US 2004/051489 A1 zeigt einen Elektromotor mit einem Rotor, einem Stator mit einem Strang, einer Vollbrückenschaltung zur Beeinflussung der Bestromung des Strangs, einem Gleichstrom-Zwischenkreis mit einem Kondensator, und mit einem Mikrocontroller zur Ansteuerung der Vollbrückenschaltung. Es wird in Blöcken kommutiert, die Blocklänge wird durch einen Drehzahlregler vorgegeben, und der Beginn der Bestromung und das Ende der Bestromung des Blocks werden so bestimmt, dass der Block in der Mitte zwischen zwei Hall-Wechseln liegt. Nach dem Ende des Blocks werden beide oberen Transistoren nicht-leitend und beide unteren Transistoren leitend geschaltet, so dass die Anschlüsse des Strangs über die beiden unteren Transistoren miteinander verbunden sind, und ein entsprechender Strom fließen kann. Eine Auswerteschaltung ist vorgesehen, die bestimmt, zu welchem Zeitpunkt dieser Strom den Wert Null hat, und anschließend werden alle vier Transistoren der Vollbrückenschaltung nicht-leitend gesteuert. Hierdurch wird vermieden, dass Energie von der Wicklung in den Kondensator zurückgespeist wird.

Die DE 10 2005 020 737 beschreibt ein Verfahren zum Betrieb eines mindestens zweisträngigen, elektronisch kommutierten Motors, bei welchem die in einer Phase jeweils in dem nicht bestromten Statorstrang des Stators induzierte Spannung differenziert wird, um ein Steuersignal zur Steuerung der Kommutierung des Motors zu erzeugen. Da bei zweisträngigen, und generell bei mehrsträngigen Statorwicklungen niemals alle Statorstränge gleichzeitig bestromt werden, kann die zur Erzeugung des Steuersignals erforderliche Erfassung des Nulldurchgangs der induzierten Spannung kontinuierlich jeweils an einem nicht bestromten Statorstrang erfolgen. Diese Erfassung erfordert jedoch in der Regel einen relativ hohen schaltungstechnischen Aufwand.

Bei einem einsträngigen Motor muss darüber hinaus die Bestromung des Statorstrangs für einen ausreichend langen Zeitraum während des zu erwartenden Nulldurchgangs der induzierten Spannung ausgesetzt werden, um die Erfassung dieses Nulldurchgangs zu ermöglichen. Durch derartige Bestromungslücken werden jedoch die maximale Leistung und der Wirkungsgrad des Motors reduziert.

Aufgabe der vorliegenden Erfindung ist es, eine verbesserte Kommutierung einsträngiger Elektromotoren zu ermöglichen. Diese Aufgabe wird durch ein Verfahren nach Anspruch 1 und einen elektronisch kommutierten Motor nach Anspruch 15 bzw. 31 gelöst.

Der Erfindung liegt die Erkenntnis zugrunde, dass die induzierte Spannung, welche jeweils bei einer Kommutierung eines ECM in dessen Statorwicklung auftritt, einen Rückspeisungsstrom beeinflusst, welcher in einen dem ECM zugeordneten Gleichstrom-Zwischenkreis zurückgespeist wird. Eine Erfassung dieses Rückspeisungsstroms ermöglicht somit einen Rückschluss auf die induzierte Spannung und kann dementsprechend zur Bestimmung geeigneter Kommutierungszeitpunkte für die Kommutierung des ECM verwendet werden. Ein Grundgedanke der Erfindung besteht darin, dass dieser zurückgespeiste Strom bei einer Kommutierung zu optimalen Kommutierungszeitpunkten zeitlich und/oder absolut (z.B. maximale Stromhöhe oder Integral der Stromhöhe über die Zeit) minimal ist. Die Erfindung ist hierbei jedoch nicht auf einen bestimmten Motorentyp beschränkt.

Insbesondere wird die Aufgabe der vorliegenden Erfindung durch ein Verfahren gemäß Anspruch 1 gelöst. Dementsprechend werden geeignete Kommutierungszeitpunkte für einen ECM mit einem zugeordneten Gleichstrom-Zwischenkreis in Abhängigkeit von der Rückspeisung in den im Zwischenkreis angeordneten Zwischenkreiskondensator bestimmt. Die Messung der Rückspeisung kann z.B. über eine Messung des Ladezustands des Zwischenkreiskondensators erfolgen, der abhängig vom Rückspeisungsstrom ist, welcher wiederum von der in die Statorwicklung induzierten Spannung beeinflusst wird. Die Rückspeisung kann aber auch durch eine Messung des Rückspeisungsstroms ermittelt werden.

Gegenüber bekannten Lösungsansätzen wird somit eine Kommutierung des ECM in Abhängigkeit von der Rückspeisung in den Gleichstromzwischenkreis durchgeführt. Somit können die Leistung und der Wirkungsgrad des ECM verbessert werden, und aufwändige Verfahren zur direkten Erfassung der induzierten Spannung werden vermieden. Insbesondere kann der zurückgespeiste Strom durch die Bestimmung geeigneter Kommutierungszeitpunkte zeitlich oder bezüglich der maximalen Stromhöhe minimiert werden, sodass die Strombelastung des Zwischenkreiskondensators reduziert und dessen Lebensdauer vergrößert wird.

Eine bevorzugte Weiterbildung des erfindungsgemäßen Verfahrens ist Gegenstand des Anspruchs 2. Nach Durchführung eines ersten Kommutierungsvorgangs wird eine Bestromungszeitdauer zwischen dem ersten Kommutierungsvorgang und einem zweiten Kommutierungsvorgang in Abhängigkeit von der Rückspeisung in den Zwischenkreiskondensator bestimmt. Nach Ablauf dieser Bestromungszeitdauer wird der zweite Kommutierungsvorgang eingeleitet. Somit wird für jeden Kommutierungsvorgang automatisch ein geeigneter Kommutierungszeitpunkt ermittelt, sodass die Kommutierung kontinuierlich in Abhängigkeit von der Rückspeisung in den Zwischenkreiskondensator verbessert wird.

Die Aufgabe der vorliegenden Erfindung wird ebenfalls durch einen ECM gemäß Anspruch 15 oder 31 gelöst.

Weitere Einzelheiten und vorteilhafte Weiterbildungen der Erfindung ergeben sich aus den im Folgenden beschriebenen und in den Zeichnungen dargestellten, in keiner Weise als Einschränkung der Erfindung zu verstehenden Ausführungsbeispielen sowie aus den Unteransprüchen. Es zeigt:
- Fig. 1: ein vereinfachtes Schaltbild einer Vorrichtung zur Kommutierung eines ECM gemäß einer ersten Ausführungsform der Erfindung,
- Fig. 2: ein vereinfachtes Schaltbild einer Vorrichtung zur Kommutierung eines ECM gemäß einer zweiten Ausführungsform der Erfindung,
- Fig. 3: eine schematische Darstellung verschiedener Betriebsparameter der Vorrichtung von Fig. 1 oder 2 bei optimaler Kommutierung,
- Fig. 4: eine schematische Darstellung verschiedener Betriebsparameter der Vorrichtung von Fig. 1 oder 2 bei verspäteter Kommutierung,
- Fig. 5: eine schematische Darstellung verschiedener Betriebsparameter der Vorrichtung von Fig. 1 oder 2 bei stark verspäteter Kommutierung,
- Fig. 6: die schematische Darstellung von FIG. 5 mit hervorgehobenem Kommutierungsstatus,
- Fig. 7: ein Flussdiagramm eines Verfahrens zum Betrieb der Vorrichtung von Fig. 1 oder 2 gemäß einer Ausführungsform der Erfindung,
- Fig. 8: ein Flussdiagramm eines Verfahrens zur Bestimmung geeigneter Kommutierungszeitpunkte gemäß einer Ausführungsform der Erfindung,
- Fig. 9: eine schematische Darstellung einer zur Bestimmung geeigneter Kommutierungszeitpunkte verwendeten Korrekturvariablen gemäß einer ersten Ausführungsform der Erfindung,
- Fig. 10: eine schematische Darstellung der Korrekturvariablen von Fig. 9 gemäß einer zweiten Ausführungsform der Erfindung,
- Fig. 11: eine schematische Darstellung verschiedener Betriebsparameter der Vorrichtung von Fig. 1 oder 2 bei einer Optimierung der Kommutierungszeitpunkte gemäß einer Ausführungsform der Erfindung, und
- Fig. 12: eine schematische Darstellung verschiedener Betriebsparameter der Vorrichtung von Fig. 1 oder 2 beim Hochlaufen des ECM.

In der nachfolgenden Beschreibung beziehen sich die Begriffe links, rechts, oben und unten auf die jeweilige Zeichnungsfigur und können in Abhängigkeit von einer jeweils gewählten Ausrichtung (Hochformat oder Querformat) von einer Zeichnungsfigur zur nächsten variieren. Gleiche oder gleich wirkende Teile werden in den verschiedenen Figuren mit denselben Bezugszeichen bezeichnet und gewöhnlich nur einmal beschrieben.

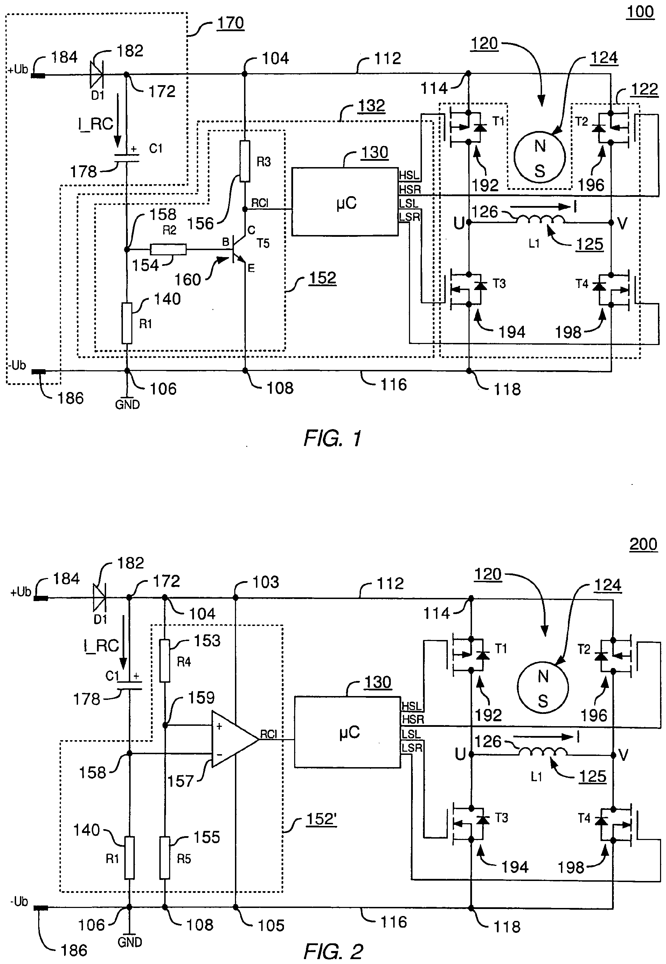

**Fig. 1** zeigt ein vereinfachtes Schaltbild, welches die prinzipielle Funktionsweise einer Vorrichtung 100 zum Betrieb eines ECM 120 gemäß der vorliegenden Erfindung illustriert. Die Vorrichtung 100 ist dazu ausgebildet, einen sensorlosen Betrieb des ECM 120 mit einer verbesserten Kommutierung zu ermöglichen, und weist den ECM 120, eine Endstufe 122, eine Steuereinheit 132 und einen Gleichstrom-Zwischenkreis 170 auf. Der ECM 120 ist bevorzugt zum Antrieb eines Lüfters ausgebildet.

Gemäß einer Ausführungsform der vorliegenden Erfindung umfasst der ECM 120 einen Rotor 124 und einen Stator 125 mit mindestens einem Statorstrang. Der Rotor 124 ist beispielsweise ein permanentmagnetischer Rotor mit einem oder mehreren Magnetpolpaaren. Der Stator 125 ist bevorzugt einsträngig ausgeführt, d.h. mit einem Statorstrang 126 (L1). Ebenso wäre auch eine andere Strangzahl möglich. Dem Statorstrang 126 sind zwei Anschlüsse U und V zugeordnet, über die der Statorstrang 126 mit der Endstufe 122 verbunden ist.

Die Endstufe 122 dient zur Beeinflussung des Motorstroms in dem Statorstrang 126 und ist eingangsseitig über einen Knotenpunkt 114 mit einer Leitung 112 und ausgangsseitig über einen Knotenpunkt 118 mit einer mit Masse (GND) verbundenen Leitung 116 verbunden. Über die Leitungen 112 und 116 wird der Endstufe 122 von dem Gleichstrom-Zwischenkreis 170 eine Versorgungsspannung U_{b} zugeführt.

Der Gleichstrom-Zwischenkreis 170 ist in Fig. 1 nur schematisch mit zwei Anschlüssen 184, 186, einer als Diode 182 (D1) und einem Zwischenkreiskondensator 178 (C1) dargestellt. An dem mit der Leitung 112 verbundenen Anschluss 184 liegt der Pluspol +U_{b} der Versorgungsspannungsquelle U_{b} an, und an dem Anschluss 186, welcher mit der Leitung 116 verbunden ist, deren Minuspol -U_{b}. Die Diode 182 (D1), deren Anode mit dem Anschluss 184 und deren Kathode mit einem Knotenpunkt 172 verbunden ist, dient zum einen als Verpolschutz und verhindert zum anderen, dass ein von dem ECM erzeugter Rückspeisestrom I_RC in die Gleichspannungsquelle U_{b} zurückfließt. Ein solcher Rückspeisestrom I_RC bewirkt somit eine Ladung des Kondensators 178.

Die Endstufe 122 ist bevorzugt als Vollbrückenschaltung mit vier Halbleiterschaltern 192 (T1, P-Kanal-Typ), 194 (T3, N-Kanal-Typ), 196 (T2, P-Kanal-Typ), 198 (T4, N-Kanal-Typ) ausgebildet, welche beispielhaft als Feldeffekttransistoren mit integrierten Freilaufdioden dargestellt sind. Die Halbleiterschalter 192, 194 bilden eine erste Halbbrücke und sind mit dem Anschluss U des Statorstrangs 126 verbunden, dessen Anschluss V mit den Halbleiterschaltern 196, 198 verbunden ist, welche eine zweite Halbbrücke bilden. Die Halbleiterschalter 192, 194, 196, 198 sind mit der Steuereinheit 132 verbunden und werden zur Kommutierung des Motorstroms von dieser angesteuert.

Die Steuereinheit 132 weist einen Mikroprozessor 130 (µC) und eine Anordnung 152 zur Erfassung des Ladezustands des Zwischenkreiskondensators 178 auf, welcher zwischen dem Knotenpunkt 172 und einem Knotenpunkt 158 angeordnet ist. Die Anordnung 152 umfasst einen Shunt-Widerstand 140 (R1), einen npn-Bipolartransistor 160 (T5) in Emitter-Schaltung und zwei Widerstände 154 (R2) und 156 (R3). Der Shunt-Widerstand 140 ist mit dem Knotenpunkt 158 und einem Knotenpunkt 106 in der Leitung 116 verbunden. Der Basis-Anschluss B des Transistors 160 ist über den Widerstand 154 ebenfalls mit dem Knotenpunkt 158 verbunden; sein Kollektor C ist über den Widerstand 156 mit einem Knotenpunkt 104 in der Leitung 112 verbunden, und sein Emitter E ist mit einem Knotenpunkt 108 in der Leitung 116 verbunden. Der Mikroprozessor 130 ist eingangsseitig mit dem Kollektor des Transistors 160 verbunden und erhält von diesem ein Signal RCI (recharge indicator), welches den Ladezustand des Zwischenkreiskondensators 178 kennzeichnet. Auf der Grundlage dieses Signals RCI erzeugt der Mikroprozessor 130 Kommutierungssignale HSL, HSR, LSL, LSR für die Endstufe 122. Diese werden den Halbleiterschaltern 192, 196, 194, 198 zugeführt, um zu vorgegebenen Kommutierungszeitpunkten in der Endstufe 122 Kommutierungsvorgänge zu bewirken.

Die Arbeitsweise der Vorrichtung 100 zur Kommutierung des ECM 120 wird nachfolgend beschrieben.

### Arbeitsweise

Im Betrieb der Vorrichtung 100 wird der ECM 120 nach dem Einschalten zunächst auf eine vorgegebene Mindestdrehzahl hochgefahren, welche erforderlich ist, um die Durchführung des erfindungsgemäßen Verfahrens zur Bestimmung geeigneter Kommutierungszeitpunkte in Abhängigkeit vom Ladezustand des Zwischenkreiskondensators 178 zu ermöglichen. Diese Mindestdrehzahl wird nach dem Einschalten bevorzugt durch eine Zwangskommutierung mit sich reduzierender Bestromungszeitdauer des Statorstrangs 126 erreicht, sodass der ECM 120 zunächst im Schrittmotorbetrieb beschleunigt wird.

Die zur Kommutierung des ECM 120 von der Steuereinheit 132 erzeugten Kommutierungssignale HSR, LSL, HSL, LSR nehmen bevorzugt den logischen Zustand "HOCH" oder "NIEDRIG" an. Das Kommutierungssignal HSR ("High Side Right") dient zur Ansteuerung des Halbleiterschalters 196, LSL ("Low Side Left") zur Ansteuerung des Halbleiterschalters 194, HSL ("High Side Left") zur Ansteuerung des Halbleiterschalters 192 und LSR ("Low Side Right") zur Ansteuerung des Halbleiterschalters 198.

Bei jeder Kommutierung werden die Kommutierungssignale HSR, LSL, HSL, LSR derart erzeugt, dass diejenigen der Halbleiterschalter 192 bis 198, die eingeschaltet sind, ausgeschaltet werden und diejenigen der Halbleiterschalter 192 bis 198, die ausgeschaltet sind, eingeschaltet werden. Beispielsweise werden bei einem ersten Kommutierungsvorgang zu einem ersten Kommutierungszeitpunkt t_{COMMUT_1} zunächst die Kommutierungssignale HSL von "NIEDRIG" auch "HOCH" und LSR von "HOCH" auf "NIEDRIG" gesetzt. Dadurch werden die Halbleiterschalter 192 und 198 ausgeschaltet und damit die Stromzufuhr vom Gleichstromzwischenkreis 170 in Richtung vom Wicklungsanschluss U zum Wicklungsanschluss V unterbrochen. Nach einer so genannten "Bestromungslücke", welche auch als "Kommutierungslücke" oder "Totzeit" bezeichnet wird, werden die Kommutierungssignale HSR von "HOCH" auf "NIEDRIG" und LSL von "NIEDRIG" auf "HOCH" gesetzt. Dadurch werden die Halbleiterschalter 196 und 194 eingeschaltet, und der Strom kann vom Wicklungsanschluss V zum Wicklungsanschluss U fließen. Der Kommutierungsvorgang zum Zeitpunkt t_{COMMUT_1} ist damit beendet. Die Bestromungslücke zwischen den durchgeführten Aus- und Einschaltvorgängen wird erzeugt, um einen Brückenkurzschluss der Vollbrückenschaltung der Endstufe 122 sicher zu vermeiden.

Nach dem Erreichen der erforderlichen Mindestdrehzahl n_min des ECM 120 wird der Ladezustand des Zwischenkreiskondensators 178 fortwährend bestimmt. Dies kann bereits ab dem Zeitpunkt des Einschaltens des ECM 120 erfolgen, wird aber zur Bestimmung geeigneter Kommutierungszeitpunkte erst ab Erreichen der Mindestdrehzahl nach jedem durchgeführten Kommutierungsvorgang erforderlich.

Zur Bestimmung des Ladezustands des Zwischenkreiskondensators 178 wird der von dem Rückspeisestrom I_RC (I_RECHARGE) erzeugte Spannungsabfall an dem Shunt-Widerstand 140 kontinuierlich erfasst. Dieser Spannungsabfall erlaubt einen Rückschluss darauf, ob und wie lange ein Rückspeisestrom in den Kondensator 178 fließt, wobei eine genaue Bestimmung der Amplitude des Rückspeisestroms nicht zwingend erforderlich ist. Die Empfindlichkeit der Erkennung des Rückspeisestroms, d.h., dessen minimal erfassbare Amplitude, kann durch eine geeignete Auswahl des Shunt-Widerstands 140 und der Messvorrichtung 160 eingestellt werden.

Es wird darauf hingewiesen, dass die Auswahl des Shunt-Widerstands 140 auch die EMV- (Elektro-Magnetische Verträglichkeit) Störaussendung beeinflusst. Hierbei wird die Filterwirkung des Kondensators 178 umso kleiner, je größer der Shunt-Widerstand 140 gewählt wird. Die Größe des Shunt-Widerstands 140 beeinflusst auch die Lebensdauer des Kondensators 178. Je hochohmiger der Shunt-Widerstand 140 ist, desto niedriger ist der Rückspeisestrom in den Kondensator 178 und desto höher die Lebensdauer des Kondensators 178.

Gemäß einer bevorzugten Ausführungsform der Erfindung wird der als Schwellwert-Schalter arbeitende Transistor 160 immer dann leitend, wenn der Spannungsabfall am Shunt-Widerstand 140 einen vorgegebenen Schwellwert überschreitet. Hierdurch wird das am Eingang des Mikroprozessors 130 anliegende logische Signal RCI logisch "NIEDRIG". Nach dem Abklingen des Rückspeisestroms sperrt der Transistor 160, und das Signal RCI wird "HOCH".

Die Größe des Schwellwerts entspricht in diesem Ausführungsbeispiel der Basis-Emitter-Spannung des eingeschalteten Bipolartransistors 160 und beträgt ca. 0,5 V. Durch entsprechende Auswahl des Shunt-Widerstands 140 wird der Schwellwert bei unterschiedlich hohen Rückspeiseströmen erreicht. Bei einem kleineren (niederohmigeren) Shunt-Widerstand 140 wird ein höherer Rückspeisestrom benötigt, um einen der Einschaltspannung entsprechenden Spannungsabfall zu erreichen. Dieser höhere Rückspeisestrom ergibt sich bei späterer Kommutierung bzw. durch kleinere Vorzündwinkel. Über den Shunt-Widerstand 140 kann auch die gewünschte Vorzündung eingestellt werden. Je größer der Shunt-Widerstand 140 gewählt wird,

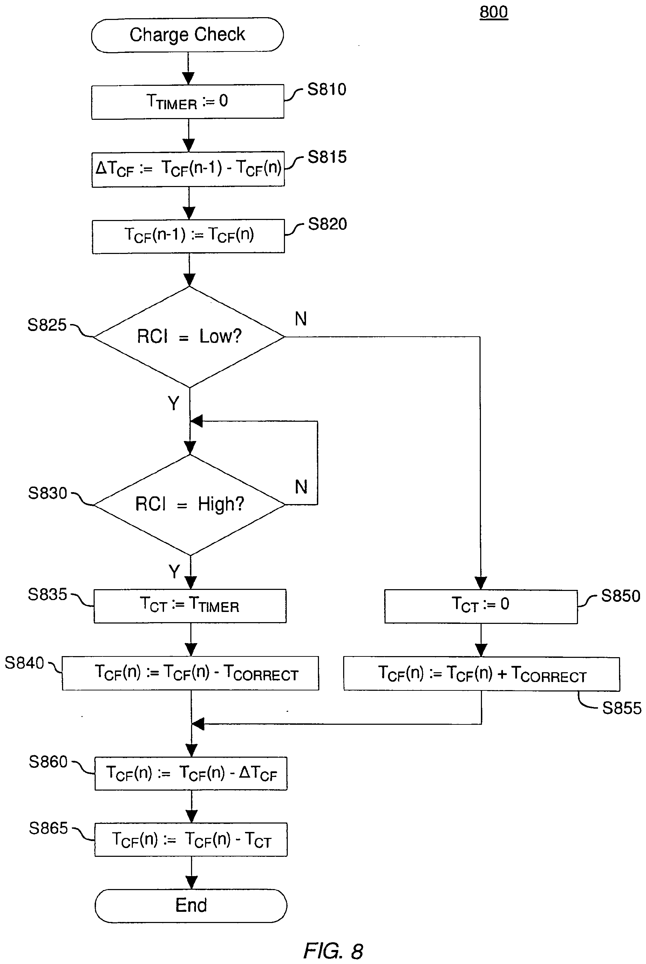

Durch Auswertung des logischen Signals RCI bestimmt der Mikroprozessor 130 eine Zeitdauer, in welcher der Rückspeisestrom I_RC oberhalb eines Schwellwerts ist und dementsprechend den Zwischenkreiskondensator 178 auflädt. Diese Zeitdauer erstreckt sich im Wesentlichen jeweils vom Ende eines Kommutierungsvorgangs bis zu dem frühesten Zeitpunkt, zu dem der von der Rückspeisung abhängige Spannungsabfall am Shunt-Widerstand 140 unter den vorgegebenen Schwellwert sinkt und entspricht dem Zeitraum, in welchem das Signal RCI logisch "NIEDRIG" ist. In Abhängigkeit von dieser Zeitdauer und anderer geeigneter Maßnahmen, welche unten bei FIG. 8 beschrieben werden, bestimmt der Mikroprozessor geeignete Kommutierungszeitpunkte t_{COMMUT} für den ECM 120, zu denen die Kommutierungssignale HSR, LSL, HSL, LSR der Halbleiterschalter 196, 194, 192, 198 wie oben beschrieben umgeschaltet werden.

Gemäß einer bevorzugten Ausführungsform werden die geeigneten Kommutierungszeitpunkte in einem indirekten Verfahren durch Bestimmung geeigneter Bestromungszeitdauern ermittelt. Hierbei wird beim Auftreten eines Rückspeisestroms nach einem Kommutierungsvorgang davon ausgegangen, dass eine zuvor ermittelte Bestromungszeitdauer zu lang war und um einen vorgegebenen Betrag zu verkürzen ist. Wenn nicht zurückgespeist wird, war die Bestromungszeitdauer tendenziell zu kurz und wird erfindungsgemäß um einen vorgegebenen Betrag verlängert. Wie oben erwähnt, wird der vorgegebene Betrag der Verkürzung bzw. Verlängerung der Bestromungszeitdauer bevorzugt in Abhängigkeit von verschiedenen Betriebszuständen wie der Rückspeisedauer, der Versorgungsspannung, dem Motorstrom, der Beschleunigung, der Verzögerung und/oder einer Sollwertvorgabe bestimmt, um den Motor zu optimieren.

Somit kann die Kommutierung des ECM 120 in Abhängigkeit von dem in den Zwischenkreis 170 zurückgespeisten Strom I_RC optimiert werden, wodurch auch der zurückgespeiste Strom minimiert wird. Vorteilhafterweise synchronisiert sich die Kommutierung hierbei automatisch auf eine optimale bzw. zumindest gute Bestromungszeitdauer ohne Verwendung zusätzlicher Sensoren zur direkten Messung der Rotorstellung. Versuche haben gezeigt, dass die Kommutierung im eingeschwungenen Zustand des ECM 120, d.h. nach erfindungsgemäßer Reduzierung des Rückspeisestroms, als eine so genannte Frühkommutierung (Frühzündung) mit verbesserter Leistung, verbessertem Wirkungsgrad und verbesserten EMV-Eigenschaften erfolgt. Insbesondere wird durch die Minimierung des zurückgespeisten Stroms die Strombelastung des Zwischenkreiskondensators 178 reduziert und dessen Lebensdauer vergrößert, welche hauptsächlich noch durch die Umgebungstemperatur und den Effektivstrom bestimmt wird.

**Fig. 2** zeigt ein vereinfachtes Schaltbild, welches die prinzipielle Funktionsweise einer Vorrichtung 200 zum Betrieb des ECM 120 von Fig. 1 gemäß einer weiteren Ausführungsform der Erfindung illustriert. Die Vorrichtung 200 entspricht im Wesentlichen der Vorrichtung 100 von Fig. 1, und es werden insbesondere die Unterschiede beschrieben.

Die Leitung 112 hat zwei Punkte 103, 104 und die Leitung 116 zwei Punkte 105, 108. Im Gegensatz zur Vorrichtung 100 weist die Vorrichtung 200 jedoch eine Anordnung 152' zur Erfassung der Rückspeisung in den Zwischenkreiskondensator 178 auf, welche den Ladezustand des Zwischenkreiskondensators 178 unter Verwendung eines Komparators 157 bestimmt. Dieser ist zur Zuführung der Versorgungsspannung U_{b} mit den Punkten 103 und 105 verbunden. Ein Widerstand 153 (R4) liegt zwischen dem Punkt 103 und einem Punkt 159, und ein Widerstand 155 (R5) zwischen dem Punkt 159 und dem Punkt 108. Der Punkt 159 ist mit dem nicht-invertierenden Eingang (+) des Komparators 157 verbunden und gibt diesem einen durch den Spannungsteiler 153, 155 definierten Schwellwert vor. Der invertierender Eingang (-) des Komparators 157 ist mit dem Knotenpunkt 158 verbunden, und der Ausgang mit dem Eingang des Mikroprozessors 130.

Der Komparator 157 vergleicht die Potentiale in den Knotenpunkten 158 und 159 miteinander und erzeugt in Abhängigkeit von dem Ergebnis des Vergleichs das Signal RCI. Hierbei wird das Signal RCI "NIEDRIG" (LOW), wenn das Potential im Knotenpunkt 159 kleiner ist als das Potential im Knotenpunkt 158. Dies ist bevorzugt dann der Fall, wenn der Ladezustand des Zwischenkreiskondensators 178 durch einen zurückgespeisten Strom beeinflusst wird und am Shunt-Widerstand 140 ein Spannungsabfall auftritt. Ansonsten ist das von dem Komparator 157 erzeugte Signal RCI "HOCH" (HIGH).

Bei der Verwendung des Komparators 157 ist der Schwellwert präziser und vom Betrag her niedriger einstellbar als bei der Verwendung des Transistors 160 von Fig. 1. Dies ermöglicht es, den Effektivstrom des Zwischenkreiskondensators 178 und die nach dem Einschwingen durchgeführte Frühkommutierung relativ unabhängig voneinander einzustellen. Durch die größere Verstärkung des Komparators 157 kann der Shunt-Widerstand 140 kleiner dimensioniert werden als bei Fig. 1, so dass die Filterwirkung des Kondensators 178 vergrößert und die EMV-Störaussendung verringert wird.

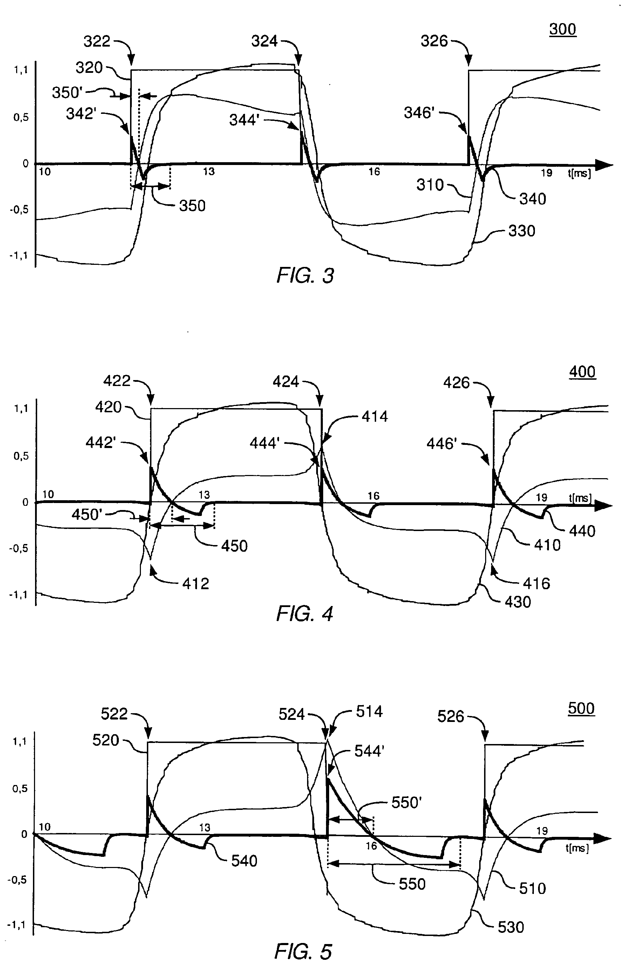

**Fig. 3** zeigt eine schematische Darstellung 300 eines beispielhaften zeitlichen Verlaufs von Betriebsparametern 310, 320, 330, 340, welche im Betrieb der Vorrichtung 100 von Fig. 1 bzw. Vorrichtung 200 von Fig. 2 bei einer gemäß einer Ausführungsform der Erfindung optimierten Kommutierung gemessen werden. Hierbei illustriert der Betriebsparameter 310 den Wicklungsstrom I in der Statorwicklung 126, der auch als Hall-Ersatzsignal bezeichnet werden kann, 320 den Kommutierungsstatus des ECM 120, 330 die in die Statorwicklung 126 induzierte Spannung und 340 den in den Kondensator 178 zurückgespeisten Strom (positiv) bzw. den aus dem Kondensator 178 gespeisten Strom (negativ).

Der Kommutierungsstatus 320 weist beispielhaft zwei unterschiedliche Pegel, logisch "NIEDRIG" bzw. "HOCH" auf. Bei jedem Pegelwechsel, d.h. zu Kommutierungszeitpunkten 322, 324, 326, wird ein Kommutierungsvorgang durchgeführt. Der Strom 340 hat nach dem Kommutierungsvorgang zu den Kommutierungszeitpunkten 322, 324, 326 positive Stromspitzen 342', 344', 346', d.h., es fließt ein Strom vom ECM 120 in den Zwischenkreiskondensator 178. Der Strom 340 klingt anschließend auf Null ab, und daraufhin fließt ein Strom in umgekehrter Richtung (negativ) vom Kondensator 178 zum ECM 120, bis dieser nach einer Zeitdauer auch wieder auf Null abklingt. Bei der Stromspitze 342' ist die Zeitdauer vom Kommutierungszeitpunkt 322 bis zur Beendigung der ersten Rückspeisung bzw. bis zum ersten Nulldurchgang (Rückspeisezeitdauer) mit 350' bezeichnet, und die Zeitdauer vom Kommutierungszeitpunkt 322 bis zum zweiten Nulldurchgang, d.h. bis der Zwischenkreiskondensator 178 die gespeicherte Energie wieder abgegeben hat, mit 350 bezeichnet. Die Zeitdauern 350' und 350 können allgemein als Abklingzeitdauern bezeichnet werden.

Fig. 3 illustriert eine im Wesentlichen optimale Kommutierung des ECM 120, welche hier eine Frühkommutierung ist, bei der die Kommutierungszeitpunkte 322, 324, 326 jeweils mit einer so genannten Vorzündung von 20° el. erfolgen. Hierdurch ergibt sich ein annähernd minimaler (Rückspeise-)Strom 340, sowohl von der maximalen Höhe zum Kommutierungszeitpunkt 322 als auch von der Abklingzeitdauer 350' bzw. 350. Dies wird durch die Gleichförmigkeit und Symmetrie des Wicklungsstroms 310 verdeutlicht, welcher weitgehend frei von unerwünschten Stromspitzen ist und somit zu einer reduzierten EMV-Störaussendung führt.

**Fig. 4** zeigt eine schematische Darstellung 400 eines beispielhaften Verlaufs eines Wicklungsstroms 410, eines Kommutierungsstatus 420, einer induzierten Spannung 430 und eines Rückspeisestroms 440, welche im Betrieb der Vorrichtung 100 von Fig. 1 bzw. Vorrichtung 200 von Fig. 2 bei einer Kommutierung ohne Vor- bzw. Nachzündung gemessen werden. Dementsprechend verdeutlicht Fig. 4 den Wicklungsstrom 410 und den zurückgespeisten Strom 440 bei einer Kommutierung des ECM 120 zu Kommutierungszeitpunkten 422, 424, 426, welche nicht erfindungsgemäß optimiert sind.

Zu den Kommutierungszeitpunkten 422, 424, 426 entstehen Stromspitzen 442', 444', 446' im Rückspeisestrom 440, welche von der Stromstärke her annähernd 1,5-mal größer sind als die bei der optimierten Frühkommutierung gemäß Fig. 3 auftretenden Stromspitzen 342', 344', 346'. Diese Stromspitzen 442', 444', 446' benötigen eine Zeitdauer 450' bzw. 450 zum Abklingen, welche jeweils annähernd 1,5-mal größer ist als bei Fig. 3. In Fig. 4 ist beispielhaft eine Rückspeisezeitdauer (Abklingzeitdauer) 450' bzw. 450 zum Vergleich mit der Rückspeisezeitdauer 350' bzw. 350 von Fig. 3 dargestellt. Der Wicklungsstrom 410 hat zu den Kommutierungszeitpunkten 422, 424, 426 Stromspitzen 412, 414, 416, welche zu unerwünschten EMV-Störaussendungen führen.

**Fig. 5** zeigt eine schematische Darstellung 500 eines beispielhaften Verlaufs eines Wicklungsstroms 510, eines Kommutierungsstatus 520, einer induzierten Spannung 530, und eines Rückspeisestroms 540, welche im Betrieb der Vorrichtung 100 von Fig. 1 bzw. Vorrichtung 200 von Fig. 2 bei einer um 10° el. verspäteten Kommutierung gemessen werden.

Beim Kommutierungszeitpunkt 524 entsteht nach der Kommutierung eine Stromspitze 544' im Rückspeisestrom 540, welche annähernd doppelt so groß ist wie die bei der optimierten Frühkommutierung gemäß Fig. 3 auftretenden Stromspitzen 342', 344', 346'. Diese Stromspitze 544' benötigt eine Zeitdauer 550' bzw. 550 zum Abklingen, welche annähernd dreimal so groß ist wie die Zeitdauer, welche die Stromspitzen 342', 344', 346' gemäß Fig. 3 zum Abklingen benötigen, vgl. mit der Zeitdauer 350' bzw. 350 von Fig. 3. Auch weist der Wicklungsstrom 510 zu dem Kommutierungszeitpunkt 524 eine Stromspitze 514 auf, welche annähernd doppelt so groß ist wie die Stromspitze 414 im Wicklungsstrom 410 und somit zu einer noch stärkeren unerwünschten EMV-Störaussendung führt. Die Unsymmetrie des Rückspeisestroms 540 beruht darauf, dass der Zündwinkel bei den Kommutierungszeitpunkten 522, 526 ca. 0 °el. ist, beim Kommutierungszeitpunkt 524 +10 °el. (Nachzündung). Die Nachzündung ist auch daran zu erkennen, dass die induzierte Spannung 530 den Nulldurchgang vor dem Kommutierungszeitpunkt 524 hat. Der Nulldurchgang der induzierten Spannung entspricht einem Zündwinkel von 0 °el.

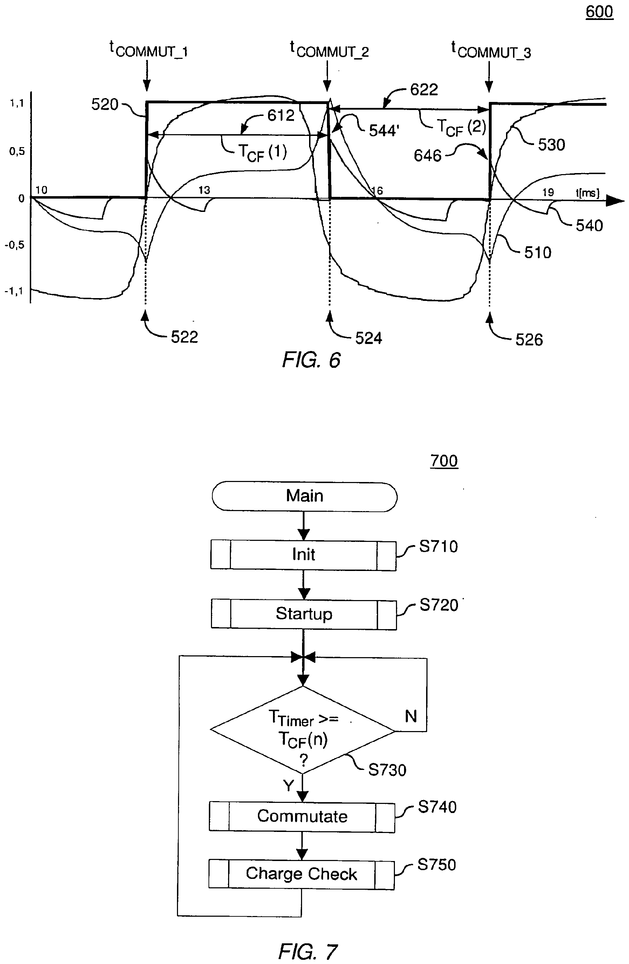

**Fig. 6** zeigt eine schematische Darstellung 600 mit dem Wicklungsstrom 510, dem Kommutierungsstatus 520, der induzierten Spannung 530, und dem Rückspeisestrom 540 von Fig. 5, in welcher der Kommutierungsstatus 520 zur Verdeutlichung der zu den beispielhaften Kommutierungszeitpunkten 522, 524 und 526 durchgeführten Kommutierungsvorgänge hervorgehoben ist.

Zu dem Kommutierungszeitpunkt 522 (t_{COMMUT_1}) wird ein erster Kommutierungsvorgang eingeleitet, bei welchem beispielsweise die Halbleiterschalter 192 und 198 ausgeschaltet und die Halbleiterschalter 194 und 196 eingeschaltet werden, wobei der Kommutierungsstatus 520 von "NIEDRIG" zu "HOCH" wechselt. Dadurch wird der Statorstrang 126 für eine Bestromungszeitdauer 612 (T_{CF}(1)) über die Halbleiterschalter 194 und 196 bis zum Kommutierungszeitpunkt 524 (T_{COMMUT_2}) bestromt, an welchem ein zweiter Kommutierungsvorgang mit der Nachzündung von 10° el. eingeleitet wird. Hierbei werden die Halbleiterschalter 194 und 196 ausgeschaltet und die Halbleiterschalter 192 und 198 werden eingeschaltet, wobei der Kommutierungsstatus 520 von "HOCH" zu "NIEDRIG" wechselt. Dadurch wird der Statorstrang 126 für eine Bestromungszeitdauer 622 (T_{CF}(2)) über die Halbleiterschalter 192 und 198 bis zum Kommutierungszeitpunkt 526 (t_{COMMUT_3}) bestromt,

Da die Spitze 544' des Rückspeisestroms 540 (vgl. Fig. 5) bei dem zweiten Kommutierungsvorgang sehr groß ist, da zu spät kommutiert wurde, wird die Bestromungszeitdauer T_{CF}(2) erfindungsgemäß verringert, um somit eine beim Kommutierungszeitpunkt 526 auftretende Spitze 646 des Rückspeisestroms 540 zu reduzieren. Ein beispielhaftes Verfahren zur Bestimmung geeigneter Bestromungszeitdauern bzw. Kommutierungszeitpunkte wird unten bei Fig. 8 beschrieben.

**Fig. 7** zeigt ein Flussdiagramm eines Verfahrens 700 zum Betrieb der Vorrichtung 100 von Fig. 1 bzw. der Vorrichtung 200 von Fig. 2 gemäß einer bevorzugten Ausführungsform der Erfindung. Das Verfahren 700 wird bevorzugt als Hauptprogramm der Steuereinheit 132 in Form einer Endlosschleife durchgeführt, deren Ausführung jeweils bei der Inbetriebnahme des ECM 120 nach einer Initialisierung und einer Beschleunigung auf eine vorgegebene Mindestdrehzahl beginnt und nur bei einer Unterbrechung bzw. Beendigung des Betriebs wieder endet.

Die Initialisierung des Hauptprogramms erfolgt in einem Unterprogramm "Init", welches in Schritt S710 ausgeführt wird, wobei die Steuereinheit 132 mit ihren Ein- und Ausgängen sowie den benötigten Steuervariablen initialisiert wird. Beispielsweise werden in Schritt S710 die Ein- und Ausgänge des Mikroprozessors 130 initialisiert und eine vorgegebene Bestromungszeitdauer (T_{CF}(n)) wird eingestellt. Im Schritt S720 wird dann ein Unterprogramm "Startup" zum Hochfahren des ECM 120 ausgeführt, um diesen z.B. im Schrittmotorbetrieb mit Zwangskommutierungen wie oben beschrieben auf die erforderliche Mindestdrehzahl zu beschleunigen. Nach einer vorgegebenen Anzahl von Zwangskommutierungen wird das Unterprogramm "Startup" verlassen und die Ausführung der Endlosschleife des Hauptprogramms beginnt in Schritt S730.

In Schritt S730 wird überprüft, ob die aktuelle Bestromungszeitdauer T_{CF}(n) abgelaufen ist. Hierzu wird diese mit einer Zeitvariablen T_{Timer} verglichen, welche jeweils den Zeitraum vom zuletzt durchgeführten Kommutierungsvorgang bis zum jeweils aktuellen Zeitpunkt erfasst. Beispielsweise wird die Zeitvariable T_{TIMER} unter Verwendung eines geeigneten Zeitgebers ermittelt, welcher von der Steuereinheit 132 realisiert wird. Falls T_{Timer} ≥ T_{CF}(n) ist, ist die eingestellte Bestromungszeitdauer T_{CF}(n) abgelaufen. In diesem Fall ruft das Hauptprogramm in Schritt S740 ein Unterprogramm "Commutate" auf, welches einen Kommutierungsvorgang wie oben beschrieben durchführt. Ansonsten wartet das Hauptprogramm in Schritt S730. Nach Durchführung des Kommutierungsvorgangs S740 fährt das Hauptprogramm in Schritt S750 fort.

Es wird darauf hingewiesen, dass erfindungsgemäß jedes geeignete Unterprogramm zum Initialisieren und Hochfahren des ECM 120 verwendet werden kann. Da derartige Unterprogramme hinlänglich aus dem Stand der Technik bekannt sind, wird hier auf eine detaillierte Beschreibung beispielhafter Unterprogramme verzichtet.

In Schritt S750 ruft das Hauptprogramm ein Unterprogramm "Charge Check" zur Bestimmung einer geeigneten Bestromungszeitdauer auf, welche einen Kommutierungszeitpunkt zur Durchführung des nächsten Kommutierungsvorgangs definiert. Ein beispielhaftes Unterprogramm "Charge Check" wird unten bei Fig. 8 beschrieben. Nach Ausführung dieses Unterprogramms kehrt das Hauptprogramm von Fig. 7 zu Schritt S730 zurück. Dementsprechend wird die Bestromungszeitdauer nach jedem Kommutierungsvorgang neu bestimmt und optimiert sich somit automatisch wie oben beschrieben.

Das Auslösen des Kommutierungsvorgangs S740 kann bevorzugt auch durch einen Timer-Interrupt realisiert werden, sofern ein solcher vom µC bereitgestellt wird.

**Fig. 8** zeigt ein Flussdiagramm eines Verfahrens 800, mit dem das Unterprogramm "Charge Check" in Schritt S750 des Hauptprogramms von Fig. 7 gemäß einer bevorzugten Ausführungsform der Erfindung ausgeführt wird. Das Unterprogramm "Charge Check" beginnt nach jedem durchgeführten Kommutierungsvorgang mit Schritt S810, in dem die Zeitvariable T_{TIMER} des Timers des µC 130 auf "0" zurückgesetzt wird.

In Schritt S815 wird eine Differenz ΔT_{CF} aus der vorherigen Bestromungszeitdauer T_{CF}(n-1) und der aktuellen Bestromungszeitdauer T_{CF}(n) zu ΔT_{CF} :=T_{CF}(n-1) - T_{CF}(n) bestimmt. In Schritt S820 wird der Wert T_{CF}(n-1) mit dem Wert T_{CF}(n) überschrieben.

In Schritt S825 wird überprüft, ob das an dem Mikroprozessor 130 anliegende Signal RCI logisch "NIEDRIG" ist, d.h., ob ein Rückspeisestrom von der Statorwicklung 126 in den Gleichstrom-Zwischenkreis 170 fließt. Falls das RCI Signal logisch "NIEDRIG" ist, fährt das Unterprogramm "Charge Check" mit Schritt S830 fort, ansonsten mit Schritt S850.

In Schritt S830 wird überprüft, ob das RCI Signal logisch "HOCH" ist. Falls das RCI Signal logisch "HOCH" ist, fährt das Unterprogramm "Charge Check" mit Schritt S835 fort. Ansonsten wartet es in Schritt S830, bis das RCI Signal logisch "HOCH" wird. Dementsprechend dient Schritt S830 dazu, den Zeitpunkt zu bestimmen, an dem der Rückspeisestrom abgeklungen ist und das RCI Signal von logisch "NIEDRIG" auf logisch "HOCH" wechselt.

In Schritt S835 wird eine Zeitdauer T_{CT} bestimmt, welche die Dauer der Rückspeisung beschreibt und sich somit vom Auftreten bis zum Abklingen des Rückspeisestroms erstreckt. Diese kann durch Bestimmen eines Zeitraums ermittelt werden, welcher sich im Wesentlichen von dem Ende des zuletzt durchgeführten Kommutierungsvorgangs bis zu dem frühesten Zeitpunkt erstreckt, zu dem ein von dem Ladezustand des Zwischenkreiskondensators 178 abhängiger Stromwert unter einem vorgegebenen Stromgrenzwert liegt. Erfindungsgemäß erfolgt die Bestimmung der Zeitdauer T_{CT} dadurch, dass dieser zu diesem frühesten Zeitpunkt der aktuelle Wert der Zeitvariablen T_{TIMER} zugewiesen wird.

Da T_{CT} in diesem Fall größer als Null ist, da ein Rückspeisestrom erfasst wurde, wurde tendenziell zu spät kommutiert und die Bestromungszeitdauer T_{CF}(n) wird in Schritt S840 um einen Korrekturwert T_{CORRECT} verringert, bevor das Unterprogramm "Charge Check" mit Schritt S860 fortfährt.

In Schritt S850 wird die Zeitdauer T_{CT} zu "0" gesetzt, da kein Rückspeisestrom erfasst wurde. Da dies wie oben beschrieben bedeutet, dass tendenziell zu früh kommutiert wurde, wird die Bestromungszeitdauer T_{CF}(n) in Schritt S855 um den Korrekturwert T_{CORRECT} vergrößert, bevor das Unterprogramm "Charge Check" mit Schritt S860 fortfährt.

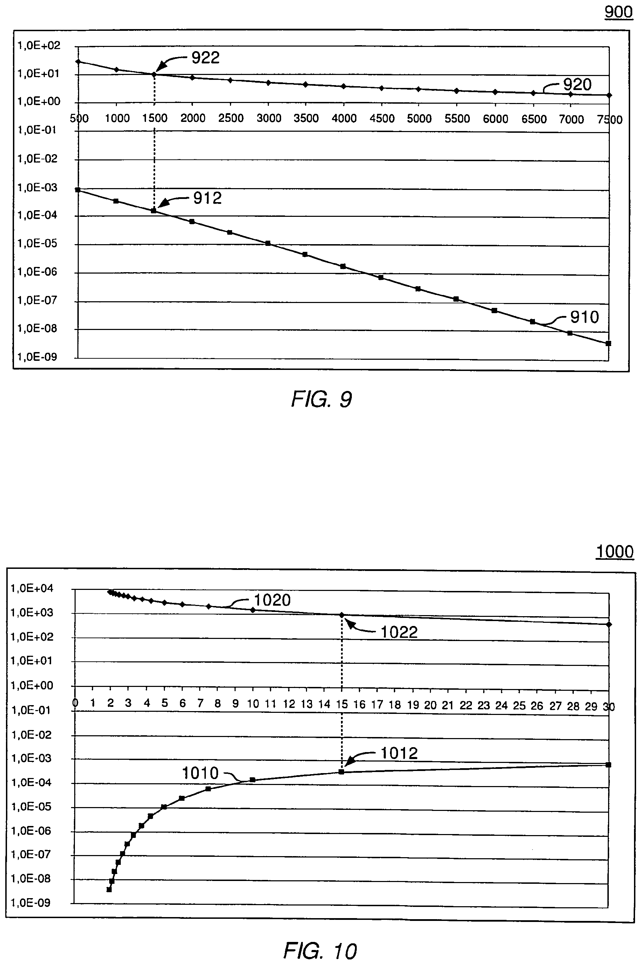

Gemäß einer bevorzugten Ausführungsform der Erfindung erfolgt die Bestimmung des Korrekturwerts T_{CORRECT} unter Verwendung einer Nachschlagtabelle, welche beispielsweise in einer hierfür geeigneten Speichereinheit der Steuereinheit 132 gespeichert ist. Eine geeignete Nachschlagtabelle kann durch die Durchführung entsprechender Laborversuche ermittelt werden. Graphische Darstellungen einer beispielhaften Nachschlagtabelle sind bei den Fig. 9 und 10 beschrieben.

In Schritt 860 wird die Bestromungszeitdauer T_{CF}(n) um den Differenzwert ΔT_{CF} reduziert. Dies bewirkt einen D-Anteil bei der Erzeugung der Bestromungszeitdauer T_{CF}(n). In Schritt 865 wird die Bestromungszeitdauer T_{CF}(n) abschließend um die Zeitdauer T_{CT} reduziert, bevor das Unterprogramm "Charge Check" endet und das Hauptprogramm von Fig. 7 zu Schritt S730 zurückkehrt.

**Fig. 9** zeigt eine schematische Darstellung 900 eines beispielhaften Verlaufs von Bestromungszeitdauern 920 und zugeordneten Korrekturwerten 910 in Abhängigkeit von der Drehzahl des ECM 120 von Fig. 1 bzw. Fig. 2. Hierbei ist jeweils einer bestimmten Bestromungszeitdauer T_{CF}(n) ein vorgegebener Korrekturwert T_{CORRECT} zugeordnet. Beispielsweise ist einer Bestromungszeitdauer 922 von 10 ms bei einer Drehzahl n = 1500 rpm ein Korrekturwert (Syncvar) 912 von etwa 15,1 µs zugeordnet.

Wie aus Fig. 9 ersichtlich, sinkt der Korrekturwert 910 monoton bei wachsender Drehzahl n des ECM 120.

Es folgt eine Tabelle zu den Korrekturwerten (Syncvar) in Abhängigkeit von der Drehzahl n bzw. von der Zeitdauer KZ zwischen jeweils zwei Kommutierungszeitpunkten für einen vierpoligen Rotor:

| n / [rpm] | KZ / [ms] | Syncvar |
|---|---|---|
| 500 | 30.000 | 8,51E-4 |
| 1000 | 15,000 | 3,47E-4 |
| 1500 | 10,000 | 1,51E-4 |
| 2000 | 7,500 | 6,17E-5 |
| 2500 | 6,000 | 2,57E-5 |
| 3000 | 5,000 | 1,05E-5 |
| 3500 | 4,286 | 4,37E-6 |
| 4000 | 3,750 | 1,74E-6 |
| 4500 | 3,333 | 7,24E-7 |
| 5000 | 3,000 | 2,95E-7 |
| 5500 | 2,727 | 1,26E-7 |
| 6000 | 2,500 | 5,25E-8 |
| 6500 | 2,308 | 2,14E-8 |
| 7000 | 2,143 | 8,91E-9 |
| 7500 | 2,000 | 3,80E-9 |

**Fig. 10** zeigt eine schematische Darstellung 1000 eines beispielhaften Verlaufs von Drehzahlen 1020 des ECM 120 von Fig. 1 bzw. Fig. 2 und zugeordneten Korrekturwerten 1010 in Abhängigkeit von der Bestromungszeitdauer T_{CF}(n), wobei jeweils einer bestimmten Drehzahl n ein vorgegebener Korrekturwert T_{CORRECT} (Syncvar) zugeordnet ist. Beispielsweise ist einer Drehzahl 1022 von etwa 1000 rpm bei einer Bestromungszeitdauer von 15 ms ein Korrekturwert 1012 von etwa 34,7 µs zugeordnet.

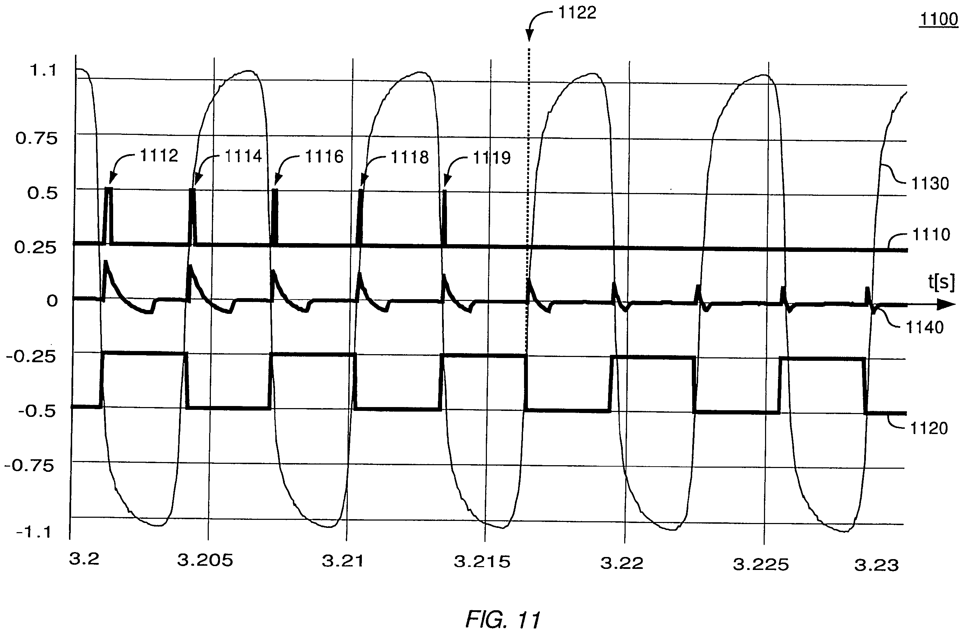

**Fig. 11** zeigt eine schematische Darstellung 1100 eines beispielhaften zeitlichen Verlaufs von Betriebsparametern 1110, 1120, 1130, 1140, welche im Betrieb der Vorrichtung 100 von Fig. 1 bzw. Vorrichtung 200 von Fig. 2 bei einer Kommutierung gemäß einer Ausführungsform der Erfindung gemessen werden. Hierbei illustriert der Betriebsparameter 1120 den Kommutierungsstatus des ECM 120, 1130 die bei Kommutierungsvorgängen in die Statorwicklung 126 induzierte Spannung, 1140 den in den Gleichstrom-Zwischenkreis 170 zurückgespeisten Strom, und 1110 einen entsprechenden Rückspeisestatus.

Fig. 11 verdeutlicht die automatische Optimierung der Kommutierung des ECM 120, welche auch als "Einschwingen" bezeichnet wird. Hierbei kennzeichnet der Rückspeisestatus 1110 Zeitpunkte, zu denen der Spannungsabfall am Shunt-Widerstand 140 einen vorgegebenen Schwellwert überschreitet und somit eine Rückspeisung erfasst wird. Dementsprechend wird zu Zeitpunkten 1112, 1114, 1116, 1118, 1119 ein Rückspeisestrom erfasst und ab dem Kommutierungszeitpunkt 1122 wird bei der Kommutierung kein zurückgespeister Strom mehr erfasst, da der vorgegebene Schwellwert nicht mehr überschritten wird. Somit wird der ECM 120 ab dem Zeitpunkt 1122 im eingeschwungenen Zustand betrieben.

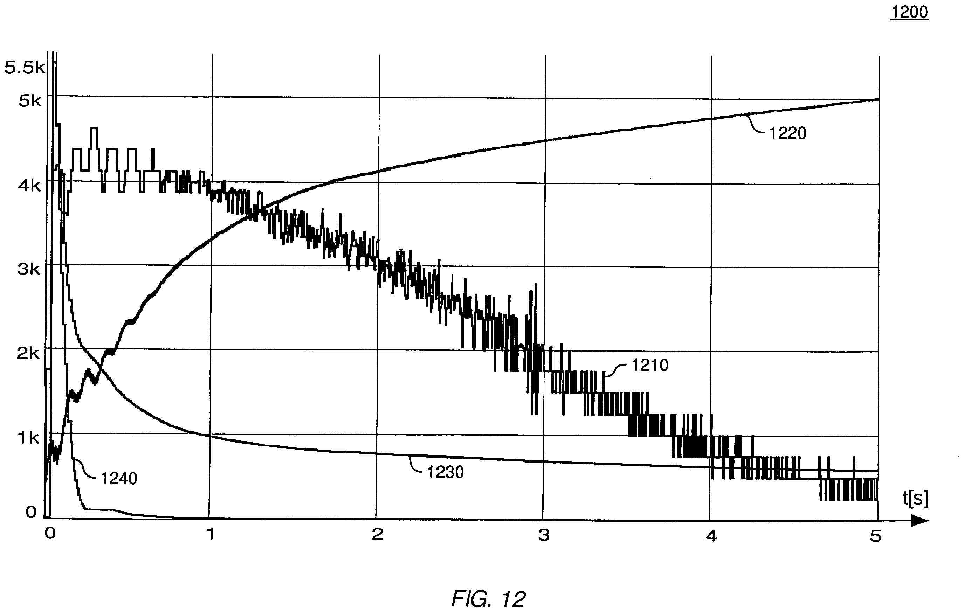

**Fig. 12** zeigt eine schematische Darstellung 1200 eines beispielhaften zeitlichen Verlaufs von Betriebsparametern 1210, 1220, 1230, 1240, welche beim Hochfahren der Vorrichtung 100 von Fig. 1 bzw. Vorrichtung 200 von Fig. 2 gemessen werden. Hierbei illustriert der Betriebsparameter 1220 die Drehzahl n des ECM 120, 1230 die jeweiligen Bestromungszeitdauern T_{CF}(n), 1240 die entsprechenden Differenzwerte ΔT_{CF}, und 1210 die jeweiligen Rückspeisezeitdauern T_{CT}.

Wie aus Fig. 12 ersichtlich, wird die Zeitdauer T_{CT} der Rückspeisung bei wachsender Drehzahl n geringer. Die Bestromungszeitdauer T_{CF}(n) nähert sich einem unteren Grenzwert an, welcher eine optimale Bestromungszeitdauer darstellt. Dementsprechend werden der Differenzwert ΔT_{CF} und die Rückspeisezeitdauern T_{CT} kontinuierlich geringer.

Naturgemäß sind im Rahmen der vorliegenden Erfindung vielfache Abwandlungen und Modifikationen möglich.

So ist es möglich, die Rückspeisung in den Zwischenkreiskondensators 178 auf andere Arten zu messen. Während die Rückspeisung in den Ausführungsbeispielen gemäß Fig. 1 und Fig. 2 über den zum Kondensator 178 fließenden Strom ermittelt wurde, kann die Messung auch über die an dem Kondensator 178 anliegende Spannung erfolgen, die sich beim Laden des Kondensator 178 durch einen zu diesem fließenden Strom I_RC erhöht. Dies geschieht bevorzugt durch Abgreifen der an dem Kondensator 178 anliegenden Spannung und Zuführen dieser Spannung zu einem Differenzierglied. Das daraus resultierende Signal kann mit einem Schwellwert verglichen und das Ergebnis einem µC 130 zur Auswertung zugeführt werden.

Sofern ein µC 130 mit einem A/D-Wandler verwendet wird, kann bei allen Ausführungsbeispielen der analog ermittelte Ladezustand des Kondensators direkt dem A/D-Wandler des µC 130 zur Auswertung zugeführt werden. Eine Vorabauswertung, wie sie in Fig. 1 mit dem Transistor 160 und in Fig. 2 mit dem Komparator 157 erfolgt, kann dann entfallen.

Auch ist es möglich, den Vorzündwinkel einzustellen, indem z.B. der Shunt-Widerstand 140 (Fig. 1 bzw. Fig. 2) oder der Schwellwert des Komparators (Fig. 2) entsprechend variabel vorzugeben. Die Vorgabe geschieht bevorzugt durch den µC 130. Es ist in bevorzugter Art möglich, durch eine solche Schaltung den Zündwinkel im Bereich von -20 °el. bis +10 °el. einzustellen. Bevorzugt geschieht diese Einstellung variabel und weiter bevorzugt wird die Einstellung des Vorzündwinkels durch den µC gesteuert. Durch die indirekte Vorgabe des Zündwinkels kann auch eine Drehzahlregelung realisiert werden.

## Patentansprüche

1. Verfahren zum Betreiben eines Elektromotors (120), welcher einen Rotor (124), einen Stator (125) mit mindestens einem Strang (126), eine Endstufe (122) zur Beeinflussung der Bestromung dieses Strangs, einen die Endstufe mit Strom versorgenden Gleichstrom-Zwischenkreis (170) mit einem Zwischenkreiskondensator (178) und eine Anordnung (152) zur Erfassung eines die Rückspeisung in den Zwischenkreiskondensator (178) charakterisierenden Werts aufweist, wobei die Anordnung (152) zur Erfassung des die Rückspeisung in den Zwischenkreiskondensator (178) charakterisierenden Werts die Rückspeisung entweder über den zum Zwischenkreiskondensator (170) fließenden Strom oder über die am Zwischenkreiskondensator (170) anliegende Spannung ermittelt,
welches Verfahren die folgenden Schritte aufweist:
- mit der Anordnung (152) zur Erfassung eines die Rückspeisung in den Zwischenkreiskondensator (178) charakterisierenden Werts wird ein die Rückspeisung in den Zwischenkreiskondensator (178) charakterisierender Wert erfasst,
- Kommutierungszeitpunkte (t_{COMMUT_1}, t_{COMMUT_2}, t_{COMMUT_3}) werden in Abhängigkeit von dem erfassten Wert bestimmt (S750), und
- in der Endstufe (122) wird zu den bestimmten Kommutierungszeitpunkten (t_{COMMUT_1}, t_{COMMUT-2}, t_{COMMUT_3}) ein Kommutierungsvorgang durchgeführt (S740).

2. Verfahren nach Anspruch 1,
welches die folgenden Schritte aufweist:
- ein erster Kommutierungsvorgang (524) wird durchgeführt,
- eine Bestromungszeitdauer (T_{CF}(2)) zwischen dem ersten Kommutierungsvorgang (524) und einem zweiten Kommutierungsvorgang (526) wird in Abhängigkeit von dem erfassten Wert nach dem ersten Kommutierungsvorgang (524) bestimmt (S750), und
- nach Ablauf der Bestromungszeitdauer (T_{CF}(2)) wird der zweite Kommutierungsvorgang (526) eingeleitet.

3. Verfahren nach Anspruch 2,
bei welchem die Bestromungszeitdauer (T_{CF}(2)) in Abhängigkeit von einer ersten Zeitdauer (T_{CT}) bestimmt wird (S865), welche sich im Wesentlichen von dem Ende des ersten Kommutierungsvorgangs (524) bis zu dem frühesten Zeitpunkt erstreckt (550), zu dem der erfasste Wert unter einem vorgegebenen Grenzwert liegt, welcher einem vorgegebenen Strom entspricht.

4. Verfahren nach Anspruch 3,
bei welchem die Anordnung (152) einen mit dem Zwischenkreiskondensator (178) in Reihe geschalteten Widerstand (140) aufweist, und bei welchem der die Rückspeisung in den Zwischenkreiskondensator (178) charakterisierende Wert über den zum Zwischenkreiskondensator (170) fließenden Strom durch Messung der an einem mit dem Zwischenkreiskondensator (178) in Reihe geschalteten Widerstand (140) abfallenden Spannung ermittelt wird.

5. Verfahren nach Anspruch 3,
bei welchem der Wert durch Differenzierung der an dem Zwischenkreiskondensator (178) anliegenden Spannung ermittelt wird.

6. Verfahren nach einem der Ansprüche 3 bis 5,
bei welchem der Grenzwert im Wesentlichen bei Null liegt.

7. Verfahren nach einem der Ansprüche 3 bis 6,
bei welchem die Bestromungszeitdauer (T_{CF}(2)) gegenüber einer vorhergehenden Bestromungszeitdauer (T_{CF}(1)) um einen vorgegebenen Verringerungsbetrag (T_{CORRECT}) verringert wird (S840), wenn die erste Zeitdauer (T_{CT}) größer als eine vorgegebene Grenzzeitdauer ist.

8. Verfahren nach Anspruch 7,
bei welchem die vorgegebene Grenzzeitdauer gleich Null ist.

9. Verfahren nach Anspruch 7,
bei welchem die vorgegebene Grenzzeitdauer abhängig von der Drehzahl ist.

10. Verfahren nach einem der Ansprüche 7 bis 9,
bei welchem der vorgegebene Verringerungsbetrag (T_{CORRECT}) abhängig von der ersten Zeitdauer (T_{CT}) ist.

11. Verfahren nach einem der Ansprüche 7 bis 10,
bei welchem der vorgegebene Verringerungsbetrag (T_{CORRECT}) abhängig von der Drehzahl ist.

12. Verfahren nach einem der Ansprüche 3 bis 11,
bei welchem die Bestromungszeitdauer (T_{CF}(2)) gegenüber einer vorhergehenden Bestromungszeitdauer (T_{CF}(1)) um einen vorgegebene Vergrößerungsbetrag (T_{CORRECT}) vergrößert wird (S855), wenn die erste Zeitdauer (T_{CT}) gleich Null ist.

13. Verfahren nach Anspruch 12,
bei welchem der vorgegebene Vergrößerungsbetrag (T_{CORRECT}) abhängig von der Drehzahl ist.

14. Verfahren nach einem der vorhergehenden Ansprüche,
bei welchem der Elektromotor (120) ein einphasiger Motor ist.

15. Verfahren nach einem der vorhergehenden Ansprüche,
bei welchem der Elektromotor (120) ein einsträngiger Motor ist.

16. Elektromotor, welcher aufweist:
einen Rotor (124),
einen Stator (125) mit mindestens einem Strang (126),
eine Endstufe (122) zur Beeinflussung der Bestromung dieses Strangs,
einen die Endstufe (122) mit Strom versorgenden Gleichstrom-Zwischenkreis (170) mit einem Zwischenkreiskondensator (178), und
eine Steuereinheit (132) mit einer Anordnung (152) zur Erfassung eines die Rückspeisung in den Zwischenkreiskondensator (178) charakterisierenden Werts, welche Anordnung (152) zur Erfassung des die Rückspeisung in den Zwischenkreiskondensator (178) charakterisierenden Werts die Rückspeisung entweder über den zum Zwischenkreiskondensator (170) fließenden Strom oder über die am Zwischenkreiskondensator (170) anliegende Spannung ermittelt, und welche Steuereinheit (132) dazu ausgebildet ist, in Abhängigkeit von dem erfassten Wert Kommutierungszeitpunkte (t_{COMMUT_1}, t_{COMMUT_2}, t_{COMMUT_3}) zu bestimmen und zu den bestimmten Kommutierungszeitpunkten (t_{COMMUT_1}, t_{COMMUT_2}, t_{COMMUT_3}) in der Endstufe (122) Kommutierungsvorgänge durchzuführen.

17. Motor nach Anspruch 16,
bei welchem die Endstufe (122) eine Vollbrückenschaltung mit Halbleiterschaltern (192, 194, 196, 198) aufweist, welche zur Beeinflussung der Bestromung des mindestens einen Strangs (126) des Stators (125) von der Steuereinheit (132) ansteuerbar sind.

18. Motor nach Anspruch 16 oder 17,
bei welchem die Anordnung (152) zur Erfassung des die Rückspeisung in den Zwischenkreiskondensator (178) charakterisierenden Werts einen mit dem Zwischenkreiskondensator (178) in Reihe geschalteten Widerstand (140) zur Erfassung des Werts anhand der an dem Widerstand (140) abfallenden Spannung aufweist.

19. Motor nach Anspruch 18,
bei welchem die Anordnung (152) zur Erfassung des die Rückspeisung in den Zwischenkreiskondensator (178) charakterisierenden Werts einen Signalgenerator (160, 157) aufweist, welcher ein von der Rückspeisung abhängiges Signal (RCI) erzeugt.

20. Motor nach Anspruch 19,
bei welchem das erzeugte Signal (RCI) einen ersten Wert (RCI = NIEDRIG) annimmt, wenn die an dem Widerstand (140) abfallende Spannung einen vorgegebenen Schwellwert überschreitet.

21. Motor nach Anspruch 20,
bei welchem das erzeugte Signal (RCI) einen zweiten Wert (RCI = HOCH) annimmt, wenn die an dem Widerstand (140) abfallende Spannung den vorgegebenen Schwellwert unterschreitet.

22. Motor nach einem der Ansprüche 19 bis 21,
bei welchem der Signalgenerator (160, 157) einen als Schwellwert-Schalter ausgeführten Bipolartransistor aufweist.

23. Motor nach einem der Ansprüche 19 bis 21,
bei welchem der Signalgenerator (160, 157) einen Komparator aufweist.

24. Motor nach einem der Ansprüche 19 bis 23,
bei welchem die Steuereinheit (132) dazu ausgebildet ist, die Kommutierungszeitpunkte (t_{COMMUT_1}, t_{COMMUT_2}, t_{COMMUT_3}) in Abhängigkeit von dem erzeugten Signal (RCI) zu bestimmen.

25. Motor nach einem der Ansprüche 16 bis 24,
bei welchem die Steuereinheit (132) einen Mikroprozessor (130) aufweist, welcher dazu ausgebildet ist, zu den bestimmten Kommutierungszeitpunkten (t_{COMMUT_1}, t_{COMMUT_2}, t_{COMMUT_3}) die Kommutierungsvorgänge in der Endstufe (122) einzuleiten.

26. Motor nach Anspruch 25,
bei welchem der Mikroprozessor (130) dazu ausgebildet ist, nach Einleiten eines ersten Kommutierungsvorgangs (524) in Abhängigkeit von dem Ladezustand des Zwischenkreiskondensators (178) eine Bestromungszeitdauer (T_{CF}(2)) zwischen diesem ersten Kommutierungsvorgang (524) und einem zweiten Kommutierungsvorgang (526) zu bestimmen, und nach Ablauf der Bestromungszeitdauer (T_{CF}(2)) diesen zweiten Kommutierungsvorgang (526) einzuleiten.

27. Motor nach einem der Ansprüche 16 bis 26,
welcher ein einphasiger Motor ist.

28. Motor nach einem der Ansprüche 16 bis 27,
welcher ein einsträngiger Motor ist.

29. Motor nach einem der Ansprüche 16 bis 28,
bei welchem eine Diode (182) im Gleichstrom-Zwischenkreis (170) vorgesehen ist, die dazu ausgebildet ist, einen Rückspeisungsstrom in eine mit dem Gleichstrom-Zwischenkreis (170) verbundene Gleichspannungsquelle (184, 186) zu verhindern.

30. Motor nach Anspruch 16,
bei welchem die Steuereinheit (132) dazu ausgebildet ist, ein Verfahren nach einem der Ansprüche 2 bis 15 auszuführen.

## Claims

1. A method for operating an electromotor (120) which comprises a rotor (124), a stator (125) with at least one line (126), an end stage (122) for influencing the current feed of this line, a direct current intermediate circuit (170) with an intermediate circuit capacitor (178) and comprises an assembly (152) for detecting a value characterizing the return feed into the intermediate circuit capacitor (178), wherein the assembly (152) for detecting the value characterizing the return feed into the intermediate circuit capacitor (178) determines the return feed either via the current flowing to the intermediate circuit capacitor (170) or via the voltage on the intermediate circuit capacitor (170), which method comprises the following steps:
- A value characterizing the return feed into the intermediate circuit capacitor (178) is determined with the assembly (152) for determining a value characterizing the return feed into the intermediate circuit capacitor (178),
- Commutation points in time (t_{COMMUT_1}, t_{COMMUT_2}, t_{COMMUT_3}), are determined as a function of the detected value (S750) and
- A commutation procedure is carried out (S740) in the end stage (122) at the determined commutation points in time (t_{COMMUT_1}, t_{COMMUT_2}, t_{COMMUT_3}) in the end stage (122).

2. The method according to Claim 1, comprising the following steps:
- A first commutation procedure (524) is carried out,
- A time for the current feed (T_{CF}(2)) between the first commutation procedure (524) and a second commutation procedure (526) is determined as a function of the detected value after the first commutation procedure (524) (S750) and
- After the passage of the time for the current feed (T_{CF}(2)), the second commutation procedure (526) is initiated.

3. The method according to Claim 2, in which the time for the current feed (T_{CF}(2)) is determined (S865) as a function of a first time (T_{CT}) which extends substantially from the end of the first commutation procedure (524) to the earliest time (550) at which the detected value is below a given boundary value corresponding to a given current.

4. The method according to Claim 3, in which the assembly (152) comprises a resistor (140) connected in series to the intermediate circuit capacitor (178) and in which the value characterizing the return feed into the intermediate circuit capacitor (178) is determined by the current flowing to the intermediate circuit capacitor (170) by measuring the voltage dropping on a resistor (140) connected in series to the intermediate circuit capacitor (178).

5. The method according to Claim 3, in which the value is determined by differentiating the voltage on the intermediate circuit capacitor (178).

6. The method according to one of Claims 3 to 5, in which the boundary value is substantially at zero.

7. The method according to one of Claims 3 to 6, in which the current time (T_{CF}(2)) is reduced opposite a previous current time (T_{CF}(1)) by a given reduction amount (T_{CORRECT}) (S840) when the first time (T_{CT} is greater than a given boundary time.

8. The method according to Claim 7, in which the given boundary time is equal to zero.

9. The method according to Claim 7, in which the given boundary time is a function of the speed.

10. The method according to one of Claims 7 to 9, in which the given reduction amount (T_{CORRECT}) is a function of the first time (T_{CT}).

11. The method according to one of Claims 7 to 10, in which the given reduction amount (T_{CORRECT}) is a function of the speed.

12. The method according to one of Claims 3 to 11, in which the current time (T_{CF}(2)) opposite a previous current time (T_{CF}(1)) is enlarged by a given enlargement amount (T_{CORRECT}) (S855) when the first time T_{CT}) is equal to zero.

13. The method according to Claim 12, in which the given enlargement amount (T_{CORRECT}) is a function of the speed.

14. The method according to one of the previous claims, in which the electromotor (120) is a single-phase motor.

15. The method according to one of the previous claims, in which the electromotor (120) is a single-line motor.

16. An electromotor comprising:
a rotor (124)
a stator (125) with at least one line (126),
an end stage (122) for influencing the current feed of this line,
a direct current intermediate circuit (170) which supplies the end stage (122) with current and with an intermediate circuit capacitor (178), and
a control unit (132) with an assembly (152) for detecting a value characterizing the return feed into the intermediate circuit capacitor (178), which assembly (152) for determining the value characterizing the return feed to the intermediate circuit capacitor (178) determines the return feed either by the current flowing to the intermediate circuit capacitor (170) or by the voltage on the intermediate circuit capacitor (170), and which control unit (132) is designed to determine commutation points in time (t_{COMMUT_1}, t_{COMMUT_2}, t_{COMMUT_3}) as a function of the determined value and to carry out commutation procedures at the determined commutation points in time (t_{COMMUT_1}, t_{COMMUT_2}, t_{COMMUT_3}) in the end stage (122).

17. The motor according to Claim 16, in which the end stage (122) comprises a complete bridge circuit with semiconductor circuits (192, 194, 196, 198 which can be controlled by the control unit (132) for influencing the current feed of the at least one line (126) of the stator (125).

18. The motor according to Claim 16 or 17, in which the assembly (152) for detecting the value characterizing the return feed into the intermediate circuit capacitor (178) comprises a resistor (140) connected in series to the intermediate circuit capacitor (178) for detecting the value using the voltage dropping on the resistor (140).

19. The motor according to Claim 18, in which the assembly (152) for detecting the value characterizing the return feed into the intermediate circuit capacitor (178) comprises a signal generator (160, 157) which generates a signal (RCI) dependent on the return feed.

20. The motor according to Claim 19, in which the generated signal (RCI) assumes a second value (RCI = NIEDRIG) when the voltage dropping on the resistor (140) exceeds a given threshold value.

21. The motor according to Claim 20, in which the generated signal (RCI) assumes a second value (RCI = HOCH) when the voltage dropping on the resistor (140) drops below the given threshold value.

22. The motor according to one of Claims 19 to 21, in which the signal generator (160, 157) comprises a bipolar transistor designed as a threshold switch.

23. The motor according to one of Claims 19 to 21, in which the signal generator (160, 157) comprises a comparator.

24. The motor according to one of Claims 19 to 23, in which the control unit (132) is designed to determine the commutation points in time (t_{COMMUT_1}, t_{COMMUT_2}, t_{COMMUT_3}) as a function of the generated signal (RCI),

25. The motor according to one of Claims 16 to 24, in which the control unit (132) comprises a microprocessor (130) which is designed to initiate the commutation procedures at the determined commutation points in time (t_{COMMUT_1}, t_{COMMUT_2}, t_{COMMUT_3}) in the end stage (122).

26. The motor according to Claim 25, in which the microprocessor (130) is designed to determine, after the initiation of a first commutation procedure (524) as a function of the loading state of the intermediate circuit capacitor (178), a current feed time (T_{CF}(2)) between this first commutation procedure (524) and a second commutation procedure (526), and to initiate this second commutation procedure (526) after passage of the current feed time (T_{CF}(2)).

27. The motor according to one of Claims 16 to 26, which is a single-phase motor.

28. The motor according to one of Claims 16 to 27, which is a single-line motor.

29. The motor according to one of Claims 16 to 28, in which a diode (182) is provided in the direct current intermediate circuit (170), which diode is designed to prevent a return feed current in a direct voltage source (184, 186) connected to the direct current intermediate circuit (170).

30. The motor according to Claim 16, in which the control unit is designed to carry out a method according to one of Claims 2 to 15.

## Revendications

1. Procédé de fonctionnement d'un moteur électrique (120), lequel présente un rotor (124), un stator (125) avec au moins un toron (126), un étage final (122) pour influencer l'alimentation de ce toron, un circuit intermédiaire à courant continu (170) alimentant l'étage final en courant avec un condensateur de circuit intermédiaire (178) et un agencement (152) de détection d'une valeur caractérisant l'alimentation de retour dans le condensateur de circuit intermédiaire (178), dans lequel l'agencement (152) de détection de la valeur caractérisant l'alimentation de retour dans le condensateur de circuit intermédiaire (178) détermine l'alimentation de retour soit par le biais du courant circulant vers le condensateur de circuit intermédiaire (170) soit par le biais de la tension appliquée au condensateur de circuit intermédiaire (170), lequel procédé présente les étapes suivantes :
- une valeur caractérisant l'alimentation de retour dans le condensateur de circuit intermédiaire (178) est déterminée avec l'agencement (152) de détection d'une valeur caractérisant l'alimentation de retour dans le condensateur de circuit intermédiaire (178),
- des moments de commutation (t_{COMMUT_1}, t_{COMMUT-2}, t_{COMMUT_3}) sont déterminés en fonction de la valeur détectée (S750), et
- dans l'étage final (122), une opération de commutation est réalisée aux moments de commutation (t_{COMMUT_1}, t_{COMMUT_2}, t_{COMMUT_3}) déterminés (S740).

2. Procédé selon la revendication 1,
lequel présente les étapes suivantes :
- une première opération de commutation (524) est réalisée,
- une durée d'alimentation (T_{CF}(2)) entre la première opération de commutation (524) et une deuxième opération de commutation (526) est déterminée en fonction de la valeur détectée après la première opération de commutation (524) (S750), et
- après l'écoulement de la durée d'alimentation (T_{CF}(2)), l'opération de commutation (526) est lancée.

3. Procédé selon la revendication 2,
dans lequel la durée d'alimentation (T_{CF}(2)) est déterminée en fonction d'une première durée (T_{CT}) (S865), laquelle s'étend sensiblement de la fin de la première opération de commutation (524) au moment le plus tôt (550), auquel la valeur détectée se situe sous une valeur limite prédéfinie, laquelle correspond à un courant prédéfini.

4. Procédé selon la revendication 3,
dans lequel l'agencement (152) présente une résistance (140) branchée en série avec le condensateur de circuit intermédiaire (178), et dans lequel la valeur caractérisant l'alimentation de retour dans le condensateur de circuit intermédiaire (178) est déterminée par le biais du courant circulant vers le condensateur de circuit intermédiaire (170) par mesure de la tension décroissante au niveau d'une résistance (140) branchée en série avec le condensateur de circuit intermédiaire (178).

5. Procédé selon la revendication 3,
dans lequel la valeur est déterminée par différentiation de la tension appliquée au condensateur de circuit intermédiaire (178).

6. Procédé selon l'une quelconque des revendications 3 à 5,
dans lequel la valeur limite est sensiblement zéro.

7. Procédé selon l'une quelconque des revendications 3 à 6,
dans lequel la durée d'alimentation (T_{CF}(2)) est réduite par rapport à une durée d'alimentation précédente (T_{CF}(1)) d'une valeur de réduction prédéfinie (T_{CORRECT}) (S840), lorsque la première durée (T_{CT}) est supérieure à une durée limite prédéfinie.

8. Procédé selon la revendication 7,
dans lequel la durée limite prédéfinie est égale à zéro.

9. Procédé selon la revendication 7,
dans lequel la durée limite prédéfinie dépend de la vitesse de rotation.

10. Procédé selon l'une quelconque des revendications 7 à 9,
dans lequel la valeur de réduction prédéfinie (T_{CORRECT}) dépend de la première durée (T_{CT}).

11. Procédé selon l'une quelconque des revendications 7 à 10,
dans lequel la valeur de réduction prédéfinie (T_{CORRECT}) dépend de la vitesse de rotation,

12. Procédé selon l'une quelconque des revendications 3 à 11,
dans lequel la durée d'alimentation (T_{CF}(2)) est augmentée par rapport à une durée d'alimentation précédente (T_{CF}=(1)) d'une valeur d'augmentation prédéfinie (T_{CORRECT}) (S855), lorsque la première durée (T_{CT}) est égale à zéro.

13. Procédé selon la revendication 12,
dans lequel la valeur d'augmentation prédéfinie (T_{CORRECT}) dépend de la vitesse de rotation.

14. Procédé selon l'une quelconque des revendications précédentes,
dans lequel le moteur électrique (120) est un moteur monophasé.

15. Procédé selon l'une quelconque des revendications précédentes,
dans lequel le moteur électrique (120) est un moteur à bobine unique.

16. Moteur électrique, lequel présente :
un rotor (124),
un stator (125) avec au moins un toron (126),
un étage final (122) pour influencer l'alimentation de ce toron,
un circuit intermédiaire à courant continu (170) alimentant l'étage final (122) en courant avec un condensateur de circuit intermédiaire (178), et
une unité de commande (132) avec un agencement (152) de détection d'une valeur caractérisant l'alimentation de retour dans le condensateur de circuit intermédiaire (178), dans lequel l'agencement (152) de détection de la valeur caractérisant l'alimentation de retour dans le condensateur de circuit intermédiaire (178) détermine l'alimentation de retour soit par le biais du courant circulant vers le condensateur de circuit intermédiaire (170) soit par le biais de la tension appliquée au condensateur de circuit intermédiaire (170), et laquelle unité de commande (132) est réalisée pour déterminer des moments de commutation (t_{COMMUT_1}, t_{COMMUT_2}, t_{COMMUT_3}) en fonction de la valeur détectée et pour réaliser des opérations de commutation dans l'étage final (122) aux moments de commutation déterminés (t_{COMMUT_1}, t_{COMMUT_2}, t_{COMMUT_3}).

17. Moteur selon la revendication 16,
dans lequel l'étage final (122) présente un circuit de plein pont avec des commutateurs à semi-conducteurs (192, 194, 196, 198), lesquels peuvent être commandés pour influencer l'alimentation de l'au moins un toron (126) du stator (125) par l'unité de commande (132).

18. Moteur selon la revendication 16 ou 17,
dans lequel l'agencement (152) de détection de la valeur caractérisant l'alimentation de retour dans le condensateur de circuit intermédiaire (178) présente une résistance (140) branchée en série avec le condensateur de circuit intermédiaire (178) pour la détection de la valeur à l'aide de la tension décroissante au niveau de la résistance (140).

19. Moteur selon la revendication 18,
dans lequel l'agencement (152) de détection de la valeur caractérisant l'alimentation de retour dans le condensateur de circuit intermédiaire (178) présente un générateur de signal (160, 157), lequel génère un signal dépendant de l'alimentation de retour (RCI).

20. Moteur selon la revendication 19,
dans lequel le signal généré (RCI) adopte une première valeur (RCI = FAIBLE), lorsque la tension décroissante au niveau de la résistance (140) dépasse une valeur seuil prédéfinie.

21. Moteur selon la revendication 20,
dans lequel le signal généré (RCI) adopte une deuxième valeur (RCI = ÉLEVÉ), lorsque la tension décroissante au niveau de la résistance (140) sous-dépasse la valeur seuil prédéfinie.

22. Moteur selon l'une quelconque des revendications 19 à 21,
dans lequel le générateur de signal (160, 157) présente un transistor bipolaire réalisé en tant que commutateur de valeur de seuil.

23. Moteur selon l'une quelconque des revendications 19 à 21,
dans lequel le générateur de signal (160, 157) présente un comparateur.

24. Moteur selon l'une quelconque des revendications 19 à 23,
dans lequel l'unité de commande (132) est réalisée pour déterminer les moments de commutation (t_{COMMUT_1}, t_{COMMUT_2}, t_{COMMUT_3}) en fonction du signal généré (RCI).

25. Moteur selon l'une quelconque des revendications 16 à 24,
dans lequel l'unité de commande (132) présente un microprocesseur (130), lequel est réalisé pour lancer les opérations de commutation dans l'étage final (122) aux moments de commutation déterminés (t_{COMMUT_1}, t_{COMMUT_2}, t_{COMMUT_3}).

26. Moteur selon la revendication 25,
dans lequel le microprocesseur (130) est réalisé pour déterminer, après lancement d'une première opération de commutation (524), en fonction de l'état de charge du condensateur de circuit intermédiaire (178), une durée d'alimentation (T_{CF}(2)) entre cette première opération de commutation (524) et une deuxième opération de commutation (526), et pour lancer cette deuxième opération de commutation (526) après l'écoulement de la durée d'alimentation (T_{CF}(2)).

27. Procédé selon l'une quelconque des revendications 16 à 26,
lequel est un moteur monophasé.

28. Procédé selon l'une quelconque des revendications 16 à 27,
lequel est un moteur à bobine unique.

29. Moteur selon l'une quelconque des revendications 16 à 28,
dans lequel une diode (182) set prévue dans le circuit intermédiaire à courant continu (170), qui est réalisée pour empêcher un courant de retour dans une source de courant continu (184, 186) reliée au circuit intermédiaire à courant continu (170).

30. Moteur selon la revendication 16,
dans lequel l'unité de commande (132) est réalisée pour effectuer un procédé selon l'une quelconque des revendications 2 à 15.
